# EUROPEAN PATENT APPLICATION

(11) **EP 2 650 592 A1**
(43) Date of publication of application: **16.10.2013**
(21) Application number: 11846731.5
(22) Date of filing: 21.05.2011
(51) Int. Cl.: F21S 2/00, H05B 37/02

(54) **LIGHT SOURCE SYSTEM CAPABLE OF ADJUSTING COLOR TEMPERATURE**

(30) Priority: 10.12.2010 CN 201010582598
(71) Applicant: Jiujiang Fared Optics Co., Ltd., Hansen Science and Technology Park Jiujiang Export Processing Zone (CN)
(72) Inventor: CHEN, Jeong-Shiun, Jiangxi 333000 (CN)
(74) Representative: Gee, Steven William
(86) International application number: PCT/CN2011/074480
(87) International publication number: WO 2012/075781

(57) **Abstract**

A light source system capable of adjusting color temperature includes the steps: disposing at least one first and second LED (light emitting diode) chips on an electrical isolation substrate; disposing a first driving circuit and a second driving circuit on the electrical insulation substrate to electrically connected to the first and second LED chips; using at least one fluorescent plastic body containing fluorescent powder to cover the first LED chip; using a driving unit to generate a first driving signal and a second driving signal transmitted to the first and second driving circuits so as to drive the first and second LED chips to emit light; and using at least one transparent packaging plastic body to cover the fluorescent plastic body and the second LED chip to provide protection and second order optic.

## Description

### BACKGROUND OF THE INVENTION

### 1. Field of the Invention

The present invention generally relates to a light source system, and more specifically to a light source system providing mixed light with adjustable color temperature by changing the driving signals.

### 2. The Prior Arts

Recently, light emitting diode (LED) has become widely used as light source because of higher efficiency of light emitting and longer lifetime, especially under the worldwide trend of power saving and carbon reduction.

The LED structure in the prior arts generally uses the LED provided on the leadframe to generate the original emitting light, and transforms part of the original emitting light by appropriate fluorescent powder into visible light, which is mixed with the remaining part of the original emitting light to output mixed light, such as white light. The leadframe further provides heat dissipation path to reduce the temperature of the LED chip so as to prevent the quality of the output light from deteriorating due to overheated. Another function of the leadframe is to serve as a substrate to support the connection circuit, which transmits the driving signal to drive or turn on the LED chip.

Generally, it is believed that the ideal LED light source for illumination has a color temperature (CT) around 4000K, which is far from the ideal nature light source with around 3000K. Therefore, an object illuminated by the LED light does not perform well in the true natural effect for human sense of vision. Additionally, the color rendering index of the LED light in the prior arts is not high, and currently, the average highest color rendering index is only 70 or 80%.

Another shortcoming in the prior arts is that complicated circuit, which generates adjustable and different driving signals, can not be directly installed on the leadframe. Thus, the color temperature of the emitting light is not dynamically modified to match the requirement of the ideal illumination light source due to the intrinsic variation of the LED. Additionally, the fluorescent powder will absorb part of the emitting light generated by the LED chip such that it is not practical to adjust the color temperature by excessively adding fluorescent powder because that needs to increase the driving current for keeping the intensity of the emitting light and thus consume a relatively high power. Meanwhile, the cost of material and manufacturing is increased, and the lifetime of the LED is reduced because of the bottleneck of heat dissipation caused by the leadframe.

Therefore, it is desired to provide a new light source system of adjustable color temperature to overcome the above problems in the prior arts.

### SUMMARY OF THE INVENTION

Therefore, the present invention has been made in view of the above problems, and it is an objective of the present invention to provide a light source system for adjusting color temperature, which includes the steps: disposing at least one first LED (light emitting diode) chip and at least one second LED chip on an electrical isolation substrate; disposing a first driving circuit and a second driving circuit on the electrical insulation substrate to electrically connected to the first LED chip and the second LED chip; using at least one fluorescent plastic body containing fluorescent powder to cover the first LED chip; using a driving unit to generate first driving signal and a second driving signal to transmit to the first driving circuit and the second driving circuit such that the first LED chip is driven or turned on by the first driving signal and the second LED chip is driven or turned on by the second driving signal; and using at least one transparent packaging plastic body to cover the fluorescent plastic body on the corresponding the first LED chip and the corresponding second LED chip to provide protection and second order optic.

The light source system of the present invention does not need the traditional leadframe but uses the electrical insulation substrate (such as ceramic substrate) instead. Additionally, the first driving signal drives the first LED chip to generate stable first emitting light, and the second driving signal is changed to adjust the intensity of the second emitting light generated by the second LED chip. Therefore, it is possible to mix the first emitting light and the second emitting light and produce the output light with adjustable color temperature as desired.

### BRIEF DESCRIPTION OF THE DRAWINGS

The present invention can be understood in more detail by reading the subsequent detailed description in conjunction with the examples and references made to the accompanying drawings, wherein:

Fig. 1 is a flow chart illustrating one embodiment of a light source system of adjustable color temperature according to the present invention; and

Fig. 2 is a schematic view illustrating the light source system of the present invention.

### DETAILED DESCRIPTION OF THE PREFERRED EMBODIMENT

The present invention may be embodied in various forms and the details of the preferred embodiments of the present invention will be described in the subsequent content with reference to the accompanying drawings. The drawings (not to scale) show and depict only the preferred embodiments of the invention and shall not be considered as limitations to the scope of the present invention. Modifications of the shape of the present invention shall too be considered to be within the spirit of the present invention.

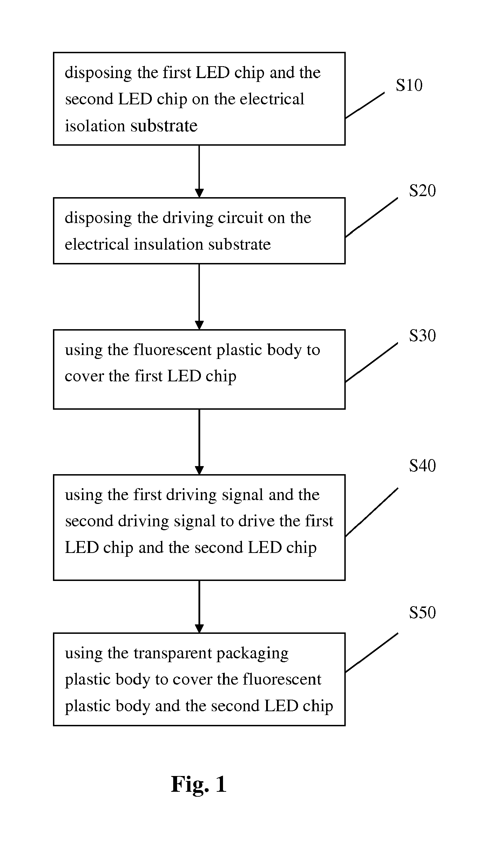

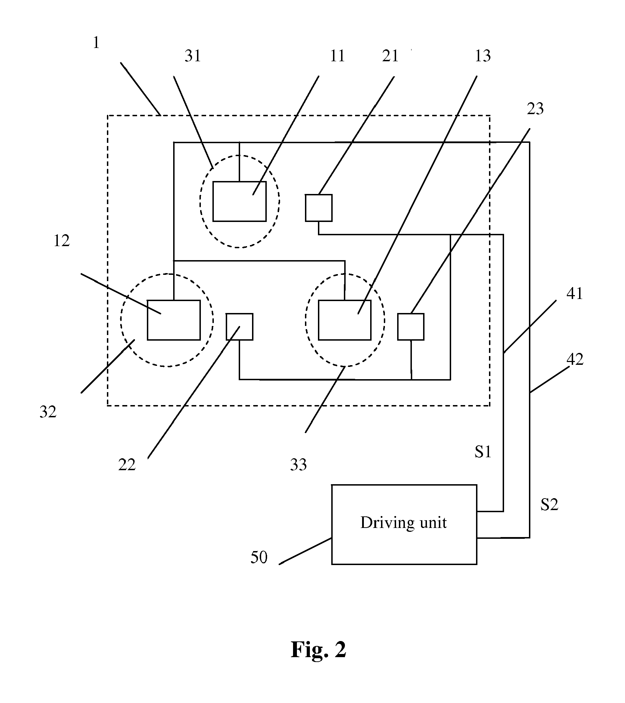

Fig. 2 is a schematic view illustrating the light source system of the present invention for adjusting color temperature (CT). Fig. 1 is a flow chart showing the processes of the light source system of the present invention. As shown in Figs. 1 and 2, the light source system of adjustable color temperature of the present invention starts at the step S10. In the step S10, the electrical isolation substrate 1 is provided with at least one first LED chip (such as reference numerals 11, 12 and 13 in Fig. 2) and at least one second LED chip (such as reference numerals 21, 22 and 23 in Fig. 2).

The electrical isolation substrate 1 is preferably selected from a group consisting of a ceramic substrate and a high temperature resistant substrate. The ceramic substrate is made from ceramic material consisting of silicon carbide, aluminum nitride, aluminum oxide or silicon oxide. The high temperature resistant substrate is made from electrical insulation and high temperature resistant material consisting of epoxy resin, polyimide (PI), glass phenolic resin, formaldyhide phenolic resin or aluminum alloy.

The first LED chips 11, 12 and 13 emit a first emitting light when driven or turned on, and similarly, the second LED chips 21, 22 and 23 emit a second emitting light when driven or turned on.

Next, the step S20 is performed by disposing the first driving circuit 41 and the second driving circuit 42 on the electrical insulation substrate 1. Specifically, the first driving circuit 41 is electrically connected to the first LED chips 11, 12 and 13, and the second driving circuit 42 is electrically connected to the second LED chips 21, 22 and 23.

The first driving circuit 41 and the second driving circuit 42 are made from electrical conductive material consisting of conductive metal, conductive alloy, conductive plastic or silver plastic.

As shown in Fig. 2, the first LED chips 11, 12 and 13 are connected in parallel by the first driving circuit 41 while the second LED chips 21, 22 and 23 are connected in parallel by the second driving circuit 42. However, it is just an illustrative example and not intended to limit the scope of the present invention. That is, the first LED chips 11, 12 and 13, and the second LED chips 21, 22 and 23 are connected in serial or by a combination manner of parallel and serial. For example, four LED chips are connected in serial to form a serial string and then several serial strings are connected in parallel. Alternatively, each of the first driving circuit 41 and the second driving circuit 42 includes a connection circuit consists of at least one of parallel connection circuit and/or at least one of serial connection circuit.

Then, in the step S30, at least one fluorescent plastic body (such as reference numerals 31, 32 and 33) are used to cover the first LED chips 11, 12 and 13. Each of the fluorescent plastic bodies 31, 32 and 33 consists of fluorescent powder, which transforms part of the original emitting light into the first emitting light within appropriate spectrum, such white light. The second emitting light has a specific spectrum different from that of the first emitting light. For example, the second emitting light is red, green or blue light.

Subsequently, the step S40 is performed by transferring the first driving signal S1 and the second driving signal S2 generated by the driving unit 50 to the first driving circuit 41 and the second driving circuit 42 such that the first driving signal S1 drives the first LED chips 11, 12 and 13, and the second driving signal S2 drives the second LED chips 21, 22 and 23. Preferably, the first driving signal S1 and the second driving signal S2 are constant current driving signals and independently operate.

It should be noted that three first LED chips 11, 12 and 13, three second LED chips 21, 22 and 23, and three fluorescent plastic bodies 31, 32 and 33 are shown in Fig. 2 as an illustrative example only for illustrating the characteristics of the present invention only. Apparently, it is not intended to limit the scope of the present invention. Therefore, the number of the first LED chips, the second LED chips and the fluorescent plastic bodies according to the present invention is one or more than one.

Additionally, the light source system of the present invention further includes the step S50, in which at least one transparent packaging plastic body (not visible) is provided and each transparent packaging plastic body covers the fluorescent plastic body on the corresponding the first LED chip and the corresponding second LED chip. As a result, isolation, protection and second order optic are implemented.

One aspect of the present invention is that the white light from the first LED chip and the second emitting light from the second LED chip are mixed to form a mixed light with a specific color temperature, which is implemented by changing the second driving signal to adjust the intensity of the second emitting light. For example, if the second emitting light is red light, the system of the present invention can produce yellowish light, such as soft yellow light with a color temperature of about 3000K or 2900K.

Another aspect of the present invention is that the original emitting light generated by the first LED chip, such as red light, is directly used, instead of traditional transformed red light from the original light by red fluorescent powder, such that intensity of the red light in increased, the intensity of the mixed light is greatly improved and especially, high color rendering index (Ra) is obtained. For example, Ra is as high as 90%, much higher than that of the traditional LED chip, such as 70% or 80%. Therefore, the system of present invention provided an almost ideal light source to perform the true color of the object illuminated by the mixed light.

A yet aspect of the present invention is that the leadframe is no longer needed and the electrical insulation substrate (such as ceramic substrate) is used instead to implement more complicated electrical circuit. That is, it is possible to use silver paste directly provided on the electrical insulation substrate to form the first driving circuit and the second driving circuit to drive the first LED chip and the second LED chip, respectively. Therefore, it is feasible to output the mixed light with the color temperature as desired by adjusting the first driving signal and/or the second driving signal.

Additionally, the light source system according to another embodiment of the present invention further includes additional steps of disposing at least one third LED chip (not visible) in the step S10, disposing the third driving circuit (not visible) in the step S20, and generating the third driving signal (not shown) in the step S40. Specifically, the third LED chip generates the third emitting light, which has different color with respect to the first emitting light generated by the first LED chip and the fluorescent plastic body an the second emitting light generated by the second LED chip. Meanwhile, the third driving circuit is connected to all the third LED chips, and receives the third driving signal to drive or turn on the third LED chips.

Consequently, in the above embodiment of the present invention, it is possible to implement the final output light with different color temperature because the third emitting light generated by the third LED chip is adjusted to match the first emitting light and the second emitting light. For instance, if the second emitting light is red light, the third emitting light is generated as green or blue light to well match the first emitting light generated as white, red or green light or white, red or blue light with different intensity so as to produce the output light with all possible color temperature.

Although the present invention has been described with reference to the preferred embodiments, it will be understood that the invention is not limited to the details described thereof. Various substitutions and modifications have been suggested in the foregoing description, and others will occur to those of ordinary skill in the art. Therefore, all such substitutions and modifications are intended to be embraced within the scope of the invention as defined in the appended claims.

## Claims

1. A light source system capable of adjusting color temperature, comprising steps of:
disposing at least one first light emitting diode (LED) chip and at least one second LED chip on an electrical isolation substrate;
disposing a first driving circuit and a second driving circuit on the electrical insulation substrate, wherein the first driving circuit is electrically connected to the first LED chip, and the second driving circuit is electrically connected to the second LED chip;
using at least one fluorescent plastic body to cover the first LED chip, wherein the fluorescent plastic body contains fluorescent powder; and
using a driving unit to generate first driving signal and a second driving signal to be transmitted to the first driving circuit and the second driving circuit such that the first LED chip is driven or turned on by the first driving signal and the second LED chip is driven or turned on by the second driving signal;
wherein, the first LED chip is driven or turned on to generate a first original emitting light, which is transformed by the fluorescent powder contained in the fluorescent plastic body into a first emitting light, the second LED chip is driven or turned on to generate a second emitting light, which is different from the first emitting light in light spectrum, and the first emitting light and the second emitting light are mixed to form a mixed output light with an adjustable color temperature by adjusting the second driving signal.

2. The light source system as claimed in claim 1, wherein the electrical isolation substrate is selected from a group consisting of a ceramic substrate and a high temperature resistant substrate, the ceramic substrate being made from ceramic material consisting of silicon carbide, aluminum nitride, aluminum oxide or silicon oxide, and the high temperature resistant substrate being made from electrical insulation and high temperature resistant material consisting of epoxy resin, polyimide (PI), glass phenolic resin, formaldyhide phenolic resin or aluminum alloy.

3. The light source system as claimed in claim 1, wherein the second emitting light includes red, blue or green light.

4. The light source system as claimed in claim 1, wherein the first driving signal and the second driving signal are independent constant current driving signals.

5. The light source system as claimed in claim 1, wherein the first driving circuit includes a connection circuit consisting of at least one of parallel connection circuit and/or at least one of serial connection circuit.

6. The light source system as claimed in claim 1, wherein the second driving circuit includes a connection circuit consisting of at least one of parallel connection circuit and/or at least one of serial connection circuit.

7. The light source system as claimed in claim 1, wherein the first driving circuit and the second driving circuit are made from electrical conductive material consisting of conductive metal, conductive alloy, conductive plastic or silver plastic.

8. The light source system as claimed in claim 1, further comprising a step of using at least one transparent packaging plastic body to cover the fluorescent plastic body on the corresponding the first LED chip and the corresponding second LED chip to provide protection and second order optic after the step of using said driving unit to generate said first driving signal and said second driving signal.

9. The light source system as claimed in claim 1, further comprising additional steps of disposing at least one third LED chip, disposing a third driving circuit, using the driving unit to generate a third driving signal, and transmitting the third driving signal to the third driving circuit, which uses the third driving signal to drive or turn on the at least one third LED chip to emit a third emitting light, wherein the third emitting light is different from the first emitting light and the second emitting light in light spectrum.
